# EUROPÄISCHE PATENTSCHRIFT

(11) **EP 2 751 972 B1**
(45) Veröffentlichungstag und Bekanntmachung des Hinweises auf die Patenterteilung: **26.12.2018**
(21) Anmeldenummer: 12758434.0
(22) Anmeldetag: 03.09.2012
(51) Int. Cl.: H04L 29/06

(54) **VERFAHREN ZUR DATEN UEBERTRAGUNG**
METHOD FOR DATA TRANSMISSION
PROCÉDÉ DE TRANSMISSION DE DONNÉES

(30) Priorität: 01.09.2011 AT 12532011; 06.09.2011 AT 12782011; 10.11.2011 US 201161558109 P
(43) Veröffentlichungstag der Anmeldung: 09.07.2014
(73) Patentinhaber: Eaton Intelligent Power Limited, 4 Dublin (IE)
(72) Erfinder: LISTOPAD, Manfred, A-1030 Vienna (AT); HELMREICH, Franz, 3950 Dietmanns (AT)
(74) Vertreter: Eaton IP Group EMEA
(86) Internationale Anmeldenummer: PCT/EP2012/067046
(87) Internationale Veröffentlichungsnummer: WO 2013/030392

(56) Entgegenhaltungen:
- US-B1- 6 483 852
- MING-WHEI FENG ET AL: "Wireless Sensor Network and Sensor Fusion Technology for Ubiquitous Smart Living Space Applications (Invited Paper)", UNIVERSAL COMMUNICATION, 2008. ISUC '08. SECOND INTERNATIONAL SYMPOSIUM ON, IEEE, PISCATAWAY, NJ, USA, 15. Dezember 2008 (2008-12-15), Seiten 295-302, XP031378958, ISBN: 978-0-7695-3433-6
- MIROSLAV SVEDA ET AL: "ZigBee-to-Internet Interconnection Architectures", SYSTEMS, 2007. ICONS '07. SECOND INTERNATIONAL CONFERENCE ON, IEEE, PI, 1. April 2007 (2007-04-01), Seiten 30-30, XP031085653, ISBN: 978-0-7695-2807-6

## Beschreibung

Die Erfindung betrifft ein Verfahren zur Datenübertragung gemäß dem Oberbegriff des Patentanspruches 1.

Es sind Verfahren zur Datenübertragung bekannt, bei welchen Daten drahtlos über Funk übertragen werden. Zur Überbrückung von Distanzen zwischen Sender und Zielempfänger, welche größer sind, als die Reichweite des eingesetzten Senders, ist es bei derartigen bekannten Verfahren vorgesehen, dass die Daten durch sog. Repeater, welche räumlich zwischen dem Sender und dem adressierten Empfänger angeordnet sind, empfangen und erneut versendet werden. Dabei wird ein Übertragungskette zwischen Sender und Zielempfänger aufgebaut. Derartige Verfahren werden etwa in Haustechnikanlagen bzw. in Home-Automation-Anwendungen eingesetzt.

Nachteilig an derartigen bekannten Verfahren ist, dass zur Übermittlung eines Befehls über eine lange Strecke eine Vielzahl an Sendungen erforderlich sind. Dies führt aufgrund der Sendungswiederholung, sowie einer Kollisionsvermeidung zu einer hohen Reaktionszeit derartiger Anlagen. Zudem sind die, bei derartigen Anwendungen in der Regel verwendeten Frequenzbänder, hinsichtlich deren Nutzungsdauer erheblichen Reglementierungen unterworfen. Lange Übertragungsstrecke und damit einhergehende Sendungswiederholungen können daher bei häufiger Anwendung die gesamte Funktionalität derartiger Anlagen beschränken.

Die Veröffentlichung "Ming-Whei Feng et al.: Wieless Sensor Network and Sensor Fusion Technology for Ubiquitous Smart Living Space Applications" beschreibt ein Ad hoc Netzwerk für Hausautomatisierungsanwendungen, wobei Verbindungen über längere Strecken mittels drahtgebundener Kommunikation erfolgt, und die Internation zwischen unterschiedlichen Netzwerken mittels Zigbee funktioniert.

Die Veröffentlichung "Miroslav Sved et al.: ZigBee-to-Internet Interconnection Architectures" beschreibt ein Kommunikationssystem, welches drahtlose Kommunikationsformen, insbesondere zufolge Zigbee, mit leitungsgebunden Kommunikationsformen verbindet.

Die US 6 483 852 B1 beschreibt ebenfalls ein Datennetzwerk bestehend aus Teilnehmern, welche drahtlos kommunizieren, und solchen, welche leitungsgebunden miteinander verbunden sind.

Aufgabe der Erfindung ist es daher ein Verfahren der eingangs genannten Art anzugeben, mit welchem die genannten Nachteile vermieden werden können, mit welchem Daten über große Entfernungen zwischen einem Funksender und einem adressierten Funkempfänger übertragen werden können.

Erfindungsgemäß wird dies durch die Merkmale des Patentanspruches 1 erreicht.

Dadurch können Daten über große Entfernungen zwischen einem Funksender und einem adressierten Funkempfänger übertragen werden. Da eine große Entfernung mit lediglich zwei Wiederholungen der Sendung überbrückt werden kann, kann dadurch die Reaktionszeit für eine Nachrichtenübertragung verkürzt werden. Dadurch wird das Zeitintervall für die Nutzung des durch den Funk verwendeten Frequenzbandes auch bei Übertragungen über große Strecken nicht beschnitten. Dadurch wird die Funktionalität einer entsprechenden Anordnung zur Datenübertragung auch bei häufiger Verwendung über große Entfernungen nicht eingeschränkt.

Die Unteransprüche betreffen weitere vorteilhafte Ausgestaltungen der Erfindung.

Dadurch können die vorstehend dargelegten Vorteile erzielt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossene Zeichnung, in welcher eine lediglich bevorzugte Ausführungsformen beispielhaft dargestellt ist, näher beschrieben.

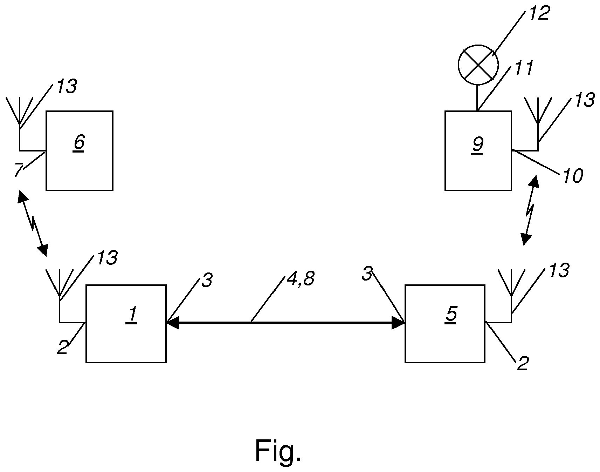

Die einzige Figur zeigt dabei eine schematische Darstellung einer bevorzugten Ausführung eines Systems bei Durchführung des erfindungsgemäßen Verfahrens.

Die einzige Figur zeigt ein System aus einer vorgebbaren Anzahl Eingabevorrichtungen 6, einer vorgebbaren Anzahl Ausgabevorrichtungen 9, sowie einer ersten und einer zweiten Kommunikationsvorrichtung 1, 5. Dabei kann auch eine größere Anzahl an Kommunikationsvorrichtung vorgesehen sein.

Die gegenständliche Erfindung betrifft ein Verfahren zur Datenübertragung. Weiters ist eine Vorrichtung zur Durchführung des Verfahrens beschrieben. Das Verfahren betrifft dabei die Datenübertragung zwischen zwei Endgeräten, etwa einer Eingabevorrichtung 6 und einer Ausgabevorrichtung 9, welche bevorzugt jeweils lediglich über Funk mit anderen Geräten
kommunizieren. Bevorzugt ist dabei der Einsatz des erfindungsgemäßen Verfahrens im Bereich eines Gebäudefunksystems, eines Hausautomatisierungssystems und/oder eines HVAC-Systems vorgesehen. Insbesondere ist der Einsatz des erfindungsgemäßen Verfahrens bei Anwendung von Funksystemen mit geringer Reichweite und/oder geringer zeitlicher Nutzungsspanne vorgesehen. Derartige Bedingungen sind etwa gegeben, wenn die Funkübertragung im Bereich sog. ISM-Frequenzen oder unter den Bedingungen sog. Short Range Devices (SRD) erfolgt. ISM als auch SRD definieren dabei sowohl Frequenzbereiche, Nutzungsdauer und max. Sendeleistung. Besonders bevorzugt sind die Frequenzbereiche 433Mhz, 868Mhz, 915Mhz und/oder 2,4Ghz.

Bevorzugt ist die Anwendung der gegenständlichen Erfindung in Zusammenhang mit paketorientierten digitalen Funksystemen vorgesehen, wie dies auch aus dem Begriff Datenpaket hervorgeht. Es kann jedoch auch die Anwendung mit anderen Funksystemen vorgesehen sein. Die entsprechenden Datenpakete sind zufolge eines ersten Übertragungsprotokolls codiert. In dem ersten Datenprotokoll ist die gesamte Struktur und der Aufbau des ersten Datenpakets festgelegt. Bevorzugt ist vorgesehen, dass das erste Übertragungsprotokoll kein standardisiertes Übertragungsprotokoll ist. Dies ermöglicht eine besonders gute Anpassung des Übertragungsprotokolls an die Erfordernisse hinsichtlich Länge des Datenpakets sowie der Nutzungsdauer.

Entsprechende Eingabevorrichtungen 6 sind etwa als Funktaster oder Funkschalter ausgebildet, und weisen in der Regel einen entsprechenden Funktransceiver auf, sowie ein Eingabeelement, etwa eine Schaltwippe oder einen Sensoreingang. Als Spannungsversorgung ist bevorzugt eine Batterie vorgesehen.

Ein Funktransceiver ist dabei eine Kombination aus einem Funktransmitter, daher einem Funksender, und einem Funkreceiver, daher einem Funkempfänger.

Entsprechende Ausgabevorrichtungen 9 sind etwa als Funkaktuator oder Funkstellglied ausgebildet, und weisen in der Regel einen entsprechenden Funktransceiver auf, sowie einen Ausgang, welcher beispielsweise zum unmittelbaren Schalten eines angeschlossenen Verbrauchers 12, etwa einer Beleuchtungsanlage, geeignet ist. Die Spannungsversorgung erfolgt dabei bevorzugt über Netzspannung via dem angeschlossenen Verbraucher, wobei auch eine Batterie vorgesehen sein kann.

Es können auch Kombinationen aus Ausgabevorrichtung und Eingabevorrichtung vorgesehen sein.

Zur Übertragung von Daten über große Entfernungen zwischen einer Eingabevorrichtung 6 und einer vorgebbaren Ausgabevorrichtung 9 ist ein Verfahren zur Datenübertragung vorgesehen, wobei ein erstes Datenpaket zufolge einem ersten Übertragungsprotokoll von einer, als Funkschnittstelle ausgebildeten, ersten Schnittstelle 2 einer ersten Kommunikationsvorrichtung 1 empfangen wird, wobei das erste Datenpaket durch die erste Kommunikationsvorrichtung 1 in wenigstens ein zweites Datenpaket zufolge einem zweiten Übertragungsprotokoll überführt wird, wobei das wenigstens eine zweite Datenpaket an eine zweite Kommunikationsvorrichtung 5 gesendet wird, wobei das zweite Datenpaket von der zweiten Kommunikationsvorrichtung 5 empfangen wird, wobei das zweite Datenpaket durch die zweite Kommunikationsvorrichtung 5 in ein drittes Datenpaket zufolge dem ersten Übertragungsprotokoll überführt wird und über eine, als Funkschnittstelle ausgebildeten, ersten Schnittstelle 2 der zweiten Kommunikationsvorrichtung ausgegeben wird.

Dadurch können Daten über große Entfernungen zwischen einem Funksender und einem adressierten Funkempfänger übertragen werden. Da eine große Entfernung mit lediglich zwei Wiederholungen der Sendung überbrückt werden kann, kann dadurch die Reaktionszeit für eine Nachrichtenübertragung verkürzt werden. Dadurch wird das Zeitintervall für die Nutzung des durch den Funk verwendeten Frequenzbandes auch bei Übertragungen über große Strecken nicht beschnitten. Dadurch wird die Funktionalität einer entsprechenden Anordnung zur Datenübertragung auch bei häufiger Verwendung über große Entfernungen nicht eingeschränkt.

Wie angeführt ist vorgesehen, das erste Datenpaket durch die erste Kommunikationsvorrichtung 1 in wenigstens ein zweites Datenpaket zufolge einem zweiten Übertragungsprotokoll überführt wird. Dabei kann jede Art einer Überführung des ersten Datenpakets oder lediglich der im ersten Datenpaket enthaltenen Daten in das zweite Datenpaket bzw. in mehrere zweite Datenpakete vorgesehen sein. Etwa eine Wandlung der Datenpakete. Gemäß einer bevorzugten Ausführungsform des gegenständlichen Verfahrens ist vorgesehen, dass das erste Datenpaket einen Datenblock innerhalb des zweiten Datenpakets bildet. Dies weist den Vorteil auf, dass in der zweiten Kommunikationsvorrichtung lediglich die Nutzdaten, also das vollständige erste Datenpaket, ausgelesen werden müssen, und ohne weitere Bearbeitung an den Funksender übergeben werden können. Dabei ist vorgesehen, dass das gesamte empfangene erste Datenpaket nicht bis auf die Nutzdaten entpackt wird, sondern als Ganzes die Nutzdaten des zweiten Datenpakets darstellt. Das eingehende erste Datenpaket wird dabei lediglich hinsichtlich der Adresse ausgelesen, dann jedoch unverändert, wie empfangen als Nutzdaten des zu bildenden zweiten Datenpakets verwendet. Aufgrund der, bei den bevorzugten Steuerungsanwendungen geringen Nutzdaten, kann in der Regel das gesamte erste Datenpaket in einem einzigen zweiten Datenpaket weitergesendet werden. Es kann jedoch auch eine Aufteilung auf mehrere zweite Datenpakete vorgesehen sein.

Es kann vorgesehen sein, Mittel der Kanalcodierung anzuwenden um Übertragungsfehler zu erkennen und beseitigen zu können. Sofern das erste Datenpaket zufolge einer entsprechenden Kanalcodierung codiert ist, ist bevorzugt vorgesehen, dass das erste Datenpaket in der ersten Kommunikationsvorrichtung 1 decodiert wird, und gegebenenfalls feststellbare und korrigierbare Übertragungsfehler korrigiert werden, bevor das erste Datenpaket in das zweite Datenpaket überführt wird.

Zur Erhöhung der Stör- als auch der Datensicherheit ist bevorzugt vorgesehen, dass das zweite Datenpaket vor dem Senden vorgebbar verschlüsselt wird. Dabei ist bevorzugt vorgesehen, dass ein Schlüssel zur Ver- und Entschlüsselung des zweiten Datenpaktes in der ersten und der zweiten Kommunikationsvorrichtung 1, 5 mittels eines vorgebbaren Algorithmus generiert wird. Dadurch, dass der Schlüssel unmittelbar in den betreffenden Vorrichtungen generiert wird, erübrigt sich eine manuelle Schlüssel- bzw. Code-Eingabe, wodurch eine Möglichkeit der Manipulation nicht gegeben ist. Zudem wird dadurch die Konfiguration einer derartigen Anlage vereinfacht, da sich ein Nutzer nicht um die Verschlüsselung kümmern muss.

Dabei ist in Weiterbildung vorgesehen, dass anlagenspezifische Einträge in einer - in der ersten und der zweiten Kommunikationsvorrichtung 1, 5 gespeicherten - Routingtabelle als Variablen in dem Algorithmus verwendet werden. Eine derartige Routingtabelle ist in allen Vorrichtungen einer entsprechenden Anlage gespeichert. In der Routingtabelle sind bevorzugt Angaben zu sämtlichen beteiligen Geräten der Anlage enthalten, wie etwa eine Gerätekennung, eine Seriennummer oder eine IP-Adresse. Da die entsprechenden Einträge in der Routingtabelle für jede Anlage einzigartig sind, sowie für alle beteiligten Vorrichtungen innerhalb der Anlage identisch, kann durch Anwendung desselben Algorithmus, in jeder Vorrichtungen innerhalb der Anlage automatisch derselbe Schlüssel erzeugt werden. Dadurch wird eine Anlage ermöglicht, welche einfach zu konfigurieren ist, und welche gut gegen unbefugte Manipulation geschützt ist.

Erfindungsgemäß ist die Übermittlung des zweiten Datenpakets von der ersten Kommunikationsvorrichtung 1 zur zweiten Kommunikationsvorrichtung 5 vorgesehen. Dabei kann selbstverständlich auch eine erfindungsgemäße Übertragung in die entgegengesetzte Richtung vorgesehen sein. Die Übermittlung bzw. Übertragung des zweiten Datenpakets kann dabei auf unterschiedliche Art erfolgen, insbesondere mittels Funk, etwa WLAN, oder leitungsgebunden. Besonders bevorzugt ist in diesem Zusammenhang vorgesehen, dass das wenigstens eine zweite Datenpaket über eine leitungsgebundene Verbindung 4 an die zweite Kommunikationsvorrichtung 5 gesendet wird.

Das zweite Datenpaket wird zufolge eines zweiten Übertragungsprotokolls gebildet. Dabei ist bevorzugt vorgesehen, dass das zweite Datenpaket zufolge einem standardisiertem Übertragungsprotokoll, vorzugsweise UDP und/oder TCP/IP und/oder IEEE 802.3 und/oder IEEE 802.11, gewandelt wird. Durch die Anwendung eines standardisierten Übertragungsprotokolls können entsprechend standardisierte Komponenten, Switches, Router, Bridges, Stecker und Kabel, verwendet werden.

Wie vorstehend ausgeführt erfolgt die Datenübertragung zwischen der Eingabevorrichtung 6 und der Ausgabevorrichtung 9 mittels zwischengeschalteter Kommunikationsvorrichtungen 1, 5.

Derartige Kommunikationsvorrichtungen 1, 5 zur Datenübertragung weisen eine erste Schnittstelle 2 und eine zweite Schnittstelle 3 auf, wobei dass die erste Schnittstelle 2 als Funkschnittstelle ausgebildet ist, und dass die zweite Schnittstelle 3 als leitungsgebundene Schnittstelle, insbesondere als Ethernet-Schnittstelle, oder als Funkschnittstelle, insbesondere als WLAN-Schnittstelle, ausgebildet ist. Dadurch können die vorgenannten Vorteile erzielt werden.

Vorzugsweise ist vorgesehen, dass die zweite Schnittstelle 3 als standardisierte IP-Schnittstelle ausgebildet ist, wodurch die Kosten für die weiters in diesem Bereich einzusetzende Netzwerktechnik gering gehalten werden können.

Bevorzugt ist vorgesehen, dass die zweite Schnittstelle 3 als leitungsgebundene Schnittstelle ausgebildet ist, wobei insbesondere die Ausbildung als Ethernet-Schnittstelle bevorzugt ist. Alternativ kann die Ausbildung der zweiten Schnittstelle 3 als WLAN-Schnittstelle, insbesondere zufolge IEEE 802.11, vorgesehen sein.

Je nach Ausbildung der zweiten Schnittstelle 3 ist diese als Stecker bzw. Buchse oder als Funkantenne ausgebildet. In der Figur ist lediglich eine Ausbildung als leitungsgebundene Schnittstelle dargestellt.

Dadurch kann eine unmittelbare Kommunikation bzw. ein unmittelbarer Datenaustausch zwischen mindestens zwei Kommunikationsvorrichtungen 1, 5 erfolgen, ohne dass hiezu eine weitere Vorrichtung, wie beispielsweise ein PC, dazwischengeschaltet sein muss. Es kann daher eine unmittelbare Datenübertragung zwischen den beiden Kommunikationsvorrichtungen 1, 5 erfolgen. Dies unterstützt in vorteilhafter Weise die Implementierung in kleine bzw. private Anlagen, welche keinen speziellen Server für derartige Anwendungen aufweisen.

Neben den beiden Schnittstellen 2, 3, sowie gegebenenfalls einer Antenne 13, weisen die Kommunikationsvorrichtungen 1, 5 bevorzugt eine Datenverarbeitungseinheit, insbesondere einen µC oder einen µP, auf, welche wenigstens mittelbar mit der ersten Schnittstelle 2 und der zweiten Schnittstelle 3 schaltungstechnisch verbunden ist.

Die Datenverarbeitungseinheit ist bevorzugt zur Konvertierung bzw. Überführung wenigstens eines - an der ersten Schnittstelle 2 empfangenen - ersten Datenpakets, gemäß einem ersten Übertragungsprotokoll, in wenigstens ein zweites Datenpaket gemäß einem zweiten Übertragungsprotokoll, insbesondere UDP und/oder TCP/IP, ausgebildet.

Die Kommunikationsvorrichtung 1, 5 weist bevorzugt weitere elektronische Baugruppen auf, welche zur Durchführung des erfindungsgemäßen Verfahrens erforderlich sind, etwa einen Speicher, sowie einen Bus.

Nachfolgend wird unter Bezugname auf die Figur ein besonders bevorzugter Ablauf eines gegenständlichen Verfahrens beschrieben.

Die Figur zeigt eine Anordnung aus einer Eingabevorrichtung 6, einer Ausgabevorrichtung 9 sowie eine erste und eine zweite Kommunikationsvorrichtung 1, 5, welche mittels einer leitungsgebundenen Verbindung 4 zur Datenübertragung verbunden sind. Die erste und eine zweite Kommunikationsvorrichtung 1, 5 sind dabei bevorzugt gleichartig ausgebildet. Alternativ kann eine Funk- bzw- WLAN-Verbindung zwischen den beiden Kommunikationsvorrichtungen 1, 5 vorgesehen sein.

Bevorzugt wird nach einer vorgebbaren Eingabe, etwa einem Tastendruck oder einem Sensorsignal, das erstes Datenpaket gemäß dem ersten Übertragungsprotokoll von der Eingabevorrichtung 6 erzeugt und über eine Eingabevorrichtungs-Funkschnittstelle 7, welche eine Antenne 13 aufweist, gesendet.

Nachfolgend wird das erste Datenpaket von einer, als Funkschnittstelle ausgebildeten, ersten Schnittstelle 2 der ersten Kommunikationsvorrichtung 1 empfangen.

Bevorzugt wird nachfolgend eine in dem ersten Datenpaket enthaltene Zieladresse ausgelesen. Weiters wird die Zieladresse mit einer - in der ersten Kommunikationsvorrichtung 1 gespeicherten - Zieladressenliste verglichen. Wenn die Zieladresse in der Zieladressenliste aufscheint, wird das erste Datenpaket in wenigstens ein zweites Datenpaket überführt.

Dabei kann es aufgrund unterschiedlicher erster und zweiter Übertragungsprotokolle vorkommen, dass sich nach der Umwandlung die Anzahl der Datenpakete unterscheidet. Durch die Überprüfung der Zieladresse kann vermieden werden, dass ein erstes Datenpaket, welches an ein Ziel in unmittelbarer Umgebung von der Eingabevorrichtung adressiert ist, nicht unnötigerweise an die zweite Kommunikationsvorrichtung 5 übertragen wird.

Nachfolgend wird das erste Datenpaket durch die erste Kommunikationsvorrichtung 1 in wenigstens ein zweites Datenpaket zufolge einem zweiten Übertragungsprotokoll überführt.

Nachfolgend wird das wenigstens eine zweite Datenpaket über eine, gemäß dem dargestellten Beispiel, leitungsgebundene Verbindung 4 an eine zweite Kommunikationsvorrichtung 5 gesendet.

Dabei ist gemäß einer bevorzugten Ausführungsform vorgesehen, dass vor dem Senden des zweiten Datenpakets mittels eines Verfahrens zur Kollisionsvermeidung, insbesondere gemäß CSMA/CD, überprüft wird, ob die leitungsgebundene Verbindung mit der zweiten Kommunikationsvorrichtung 5 frei für eine Datenübertragung ist, und das zweite Datenpaket lediglich gesendet wird, wenn die leitungsgebundene Verbindung 4 frei für eine Datenübertragung ist. Dadurch können Störungen bei der Datenübertragung vermieden werden.

Bevorzugt ist weiteres vorgesehen, dass das zweite Datenpaket unmittelbar von der ersten Kommunikationsvorrichtung 1 an die zweite Kommunikationsvorrichtung 5 übermittelt wird. Dadurch kann auf weitere Netzwerkkomponenten wie Server, Router, Switches, Bridges oder Personal Computer verzichtet werden. Dabei kann vorgesehen sein, dass weitere Kommunikationsvorrichtungen zwischen der ersten und der zweiten Kommunikationsvorrichtung 1, 5 geschaltet sind, welche entsprechende Datenpakete weiterleiten. Derartige weitere Kommunikationsvorrichtungen sind jedoch Teil der Gesamtanlage, und lediglich dann vorgesehen, wenn diese selbst zur weiteren Kommunikation über Funk mit Eingabevorrichtung 6 bzw. Ausgabevorrichtung 9 in deren Einzugsbereich vorgesehen sind. So kann beispielsweise in einem mehrgeschossigen Gebäude auf jedem Stockwerk mindestens eine Kommunikationsvorrichtung 1 angeordnet sein, zur Kommunikation mit den auf diesem Stockwerk angeordneten Eingabevorrichtungen 6 bzw. Ausgabevorrichtungen 9. Ein Datenpaket würde dabei vom ersten in den dritten Stock auch die Kommunikationsvorrichtung im zweiten Stock passieren, jedoch von dieser lediglich wiederholt werden.

Das zweite Datenpaket wird von der zweiten Kommunikationsvorrichtung 5 empfangen.

Ein besonders bevorzugtes zweites Übertragungsprotokoll ist UDP (User Datagram Protocol), welches eine einfache und schnelle, jedoch ungesicherte Datenübertragung ermöglicht, wobei keine Empfangsmeldung an den Sender, in diesem Fall die erste Kommunikationsvorrichtung 1, übermittelt wird. Insbesondere bei Anwendung von UDP bzw. eines anderen zweiten Übertragungsprotokoll mit ungesicherter Datenübertragung, ist daher bevorzugt vorgesehen, dass die zweite Kommunikationsvorrichtung 5 nach erfolgreichem Empfang des zweiten Datenpakets eine Empfangsbestätigung an die erste Kommunikationsvorrichtung 1 sendet. Dadurch erlangt die erste Kommunikationsvorrichtung 1 Gewissheit über eine sicher erfolgte Übertragung.

Bevorzugt ist dabei vorgesehen, dass die erste Kommunikationsvorrichtung 1 nach erfolgter Sendung des zweiten Datenpakets eine vorgebbare Zeitspanne den Empfang der Empfangsbestätigung abwartet. Wenn keine derartige Empfangsbestätigung der zweiten Kommunikationsvorrichtung 5 innerhalb der Zeitspanne durch die erste Kommunikationsvorrichtung 1 empfangen wird, daher bei einem Ausbleiben der Empfangsbestätigung, wird davon ausgegangen, dass das erste Datenpaket durch die zweite Kommunikationsvorrichtung 5 nicht empfangen bzw. vollständig empfangen wurde. Dabei ist vorgesehen, dass die erste Kommunikationsvorrichtung 1 das zweite Datenpaket erneut an die zweite Kommunikationsvorrichtung 5 sendet, um eine Datenübertragung zu gewährleisten. Bevorzugt ist dabei vorgesehen, dass die erste Kommunikationsvorrichtung 1 das zweite Datenpaket im Falle einer wiederholt ausbleibenden Empfangsbestätigung eine vorgebbare Anzahl, beispielsweise drei mal, wiederholt sendet. Sollte danach noch immer keine Empfangsbestätigung bei der ersten Kommunikationsvorrichtung 1 eingegangen sein, ist bevorzugt vorgesehen auf eine erneute Sendungswiederholung zu verzichten.

Dabei ist bevorzugt vorgesehen, dass - etwa bei komplexen Anlagen mit einer Vielzahl an Kommunikationsvorrichtungen - eine Zieladresse aus dem zweiten Datenpaket ausgelesen wird, und dass die Zieladresse mit einer Zieladressenliste der zweiten Kommunikationsvorrichtung 5 verglichen wird.

Nach erfolgtem Empfang des zweiten Datenpakets wird dieses - zur Weiterleitung mittels Funk - durch die zweite Kommunikationsvorrichtung 5 in ein drittes Datenpaket zufolge dem ersten Übertragungsprotokoll überführt, und nachfolgend über eine, als Funkschnittstelle ausgebildete, erste Schnittstelle 2 der zweiten Kommunikationsvorrichtung 5 ausgegeben.

Bevorzugt ist dabei vorgesehen, dass das dritte Datenpaket von einer Ausgabevorrichtung 9 empfangen wird. Nachfolgend ist dabei weiters bevorzugt vorgesehen, dass durch in dem dritten Datenpaket enthaltenen Informationen wenigstens ein Parameter der Ausgabevorrichtung 9, insbesondere ein Ausgangssignal, vorgebbar verändert wird. Bevorzugt ist dabei unter einer Änderung eines Parameters die Ansteuerung eines elektrischen Verbrauchers 12 zu verstehen.

## Patentansprüche

1. Verfahren zur Datenübertragung in einer Gebäudeautomatisierungsanlage, wobei ein erstes Datenpaket zufolge einem ersten Übertragungsprotokoll von einer, als Funkschnittstelle ausgebildeten, ersten Schnittstelle (2) einer ersten Kommunikationsvorrichtung (1) der Gebäudeautomatisierungsanlage empfangen wird, wobei das erste Datenpaket durch die erste Kommunikationsvorrichtung (1) in wenigstens ein zweites Datenpaket zufolge einem zweiten Übertragungsprotokoll überführt wird, wobei das wenigstens eine zweite Datenpaket an eine zweite Kommunikationsvorrichtung (5) der Gebäudeautomatisierungsanlage gesendet wird, wobei das zweite Datenpaket von der zweiten Kommunikationsvorrichtung (5) empfangen wird, wobei das zweite Datenpaket durch die zweite Kommunikationsvorrichtung (5) in ein drittes Datenpaket zufolge dem ersten Übertragungsprotokoll überführt wird und über eine, als Funkschnittstelle ausgebildeten, ersten Schnittstelle (2) der zweiten Kommunikationsvorrichtung ausgegeben wird, wobei das gesamte empfangene erste Datenpaket als Ganzes einen Datenblock innerhalb des zweiten Datenpakets bildet, **dadurch gekennzeichnet, dass** das zweite Datenpaket vor dem Senden vorgebbar verschlüsselt wird, dass ein Schlüssel zur Ver- und Entschlüsselung des zweiten Datenpaktes in der ersten und der zweiten Kommunikationsvorrichtung (1, 5) mittels eines vorgebbaren Algorithmus generiert wird, und dass für die Gebäudeautomatisierungsanlage spezifische Einträge in einer - in der ersten und der zweiten Kommunikationsvorrichtung (1, 5) gespeicherten - Routingtabelle als Variablen in dem Algorithmus verwendet werden.

2. Verfahren nach Anspruch 1, **dadurch gekennzeichnet, dass** das wenigstens eine zweite Datenpaket über eine leitungsgebundene Verbindung (4) an die zweite Kommunikationsvorrichtung (5) gesendet wird.

3. Verfahren nach Anspruch 1 oder 2, **dadurch gekennzeichnet, dass** - vorangehend - das erste Datenpaket nach einer vorgebbaren Eingabe von einer Eingabevorrichtung (6) erzeugt und über eine Eingabevorrichtungs-Funkschnittstelle (7) gesendet wird.

4. Verfahren nach einem der Ansprüche 1 bis 3, **dadurch gekennzeichnet, dass** das zweite Datenpaket zufolge einem standardisierten Übertragungsprotokoll, vorzugsweise UDP und/oder TCP/IP, gesendet wird.

5. Verfahren nach einem der Ansprüche 1 bis 4, **dadurch gekennzeichnet, dass** die zweite Kommunikationsvorrichtung (5) nach erfolgreichem Empfang des zweiten Datenpakets eine Empfangsbestätigung an die erste Kommunikationsvorrichtung (1) sendet.

6. Verfahren nach einem der Ansprüche 1 bis 5, **dadurch gekennzeichnet, dass** die erste Kommunikationsvorrichtung (1) nach erfolgter Sendung des zweiten Datenpakets eine vorgebbare Zeitspanne den Empfang einer Empfangsbestätigung abwartet, und bei einem Ausbleiben der Empfangsbestätigung nach Ablauf der Zeitspanne das zweite Datenpaket erneut an die zweite Kommunikationsvorrichtung (5) sendet.

7. Verfahren nach einem der Ansprüche 1 bis 6, **dadurch gekennzeichnet, dass** das zweite Datenpaket unmittelbar von der ersten Kommunikationsvorrichtung (1) an die zweite Kommunikationsvorrichtung (5) übermittelt wird.

8. Verfahren nach einem der Ansprüche 1 bis 7, **dadurch gekennzeichnet, dass** das dritte Datenpaket von einer Ausgabevorrichtung (9) empfangen wird.

9. Verfahren nach Anspruch 8, **dadurch gekennzeichnet, dass** durch in dem dritten Datenpaket enthaltenen Informationen wenigstens ein Parameter der Ausgabevorrichtung (9), insbesondere ein Ausgangssignal, vorgebbar verändert wird.

10. Verfahren nach einem der Ansprüche 1 bis 9, **dadurch gekennzeichnet, dass** nach Empfang des ersten Datenpakets durch die erste Kommunikationsvorrichtung (1), eine in dem ersten Datenpaket enthaltene Zieladresse ausgelesen wird, dass die Zieladresse mit einer Zieladressenliste verglichen wird, und dass wenn die Zieladresse in der Zieladressenliste aufscheint, das erste Datenpaket in das zweite Datenpaket überführt wird.

11. Verfahren nach einem der Ansprüche 1 bis 10, **dadurch gekennzeichnet, dass** vor dem Senden des zweiten Datenpakets mittels eines Verfahrens zur Kollisionsvermeidung, insbesondere gemäß CSMA/CD, überprüft wird, ob die leitungsgebundene Verbindung mit der zweiten Kommunikationsvorrichtung (5) frei für eine Datenübertragung ist, und das zweite Datenpaket lediglich gesendet wird, wenn die leitungsgebundene Verbindung (4) frei für eine Datenübertragung ist.

## Claims

1. Method for data transmission in a building automation unit, wherein a first data package is received according to a first transmission protocol by a first interface (2), in the form of a radio interface, of a first communication device (1) of the building automation unit, wherein the first data package is converted by the first communication device (1) into at least one second data package according to a second transmission protocol, wherein the at least one second data package is sent to a second communication device (5) of the building automation unit, wherein the second data package is received by the second communication device (5), wherein the second data package is converted by the second communication device (5) into a third data package according to the first transmission protocol and is output via a first interface (2) of the second communication device in the form of a radio interface, wherein all of the received first data package as a whole forms a data block within the second data package, **characterised in that** the second data package is encrypted in a predefinable manner before sending, **in that** a key for encrypting and decrypting the second data package is generated in the first and the second communication device (1, 5) by means of a predefinable algorithm, and **in that** for the building automation unit specific entries are used in a routing table, which is saved in the first and second communication device (1, 5), as variables in the algorithm.

2. Method according to claim 1, **characterised in that** the at least one second data package is sent via a wired connection (4) to the second communication device (5).

3. Method according to claim 1 or 2, **characterised in that** - firstly - the first data package is generated after a predefinable input by an input device (6) and sent via an input device radio interface (7).

4. Method according to any of claims 1 to 3, **characterised in that** the second data package is sent according to a standardised transmission protocol, preferably UDP and/or TCP/IP.

5. Method according to any of claims 1 to 4, **characterised in that** the second communication device (5) after receiving successfully the second data package sends an acknowledgement receipt to the first communication device (1).

6. Method according to any of claims 1 to 5, **characterised in that** the first communication device (1) after sending the second data package waits for a predefinable period to receive an acknowledgement receipt, and in the absence of an acknowledgement receipt after the expiry of the period the second data package is again sent to the second communication device (5).

7. Method according to any of claims 1 to 6, **characterised in that** the second data package is sent directly from the first communication device (1) to the second communication device (5).

8. Method according to any of claims 1 to 7, **characterised in that** the third data package is received by an output device (9).

9. Method according to claim 8, **characterised in that** from information contained in the third data package at least one parameter of the output device (9), in particular an output signal, is changed in a predefinable manner.

10. Method according to any of claims 1 to 9, **characterised in that** after receiving the first data package by means of the first communication device (1), a target address contained in the first data package is read, **in that** the target address is compared with a target address list, and **in that** if the target address appears in the target address list the first data package is converted into the second data package.

11. Method according to any of claims 1 to 10, **characterised in that** before sending the second data package by means of a method for avoiding collision, in particular according to CSMA/CD, it is checked to see whether the wired connection with the second communication device (5) is free for data transmission, and the second data package is only sent when the wired connection (4) is free for data transmission.

## Revendications

1. Procédé de transmission de données dans une installation de domotique, dans lequel un premier paquet de données est reçu suivant un premier protocole de transmission par une première interface (2) d'un premier dispositif de communication (1) de l'installation de domotique, réalisée sous forme d'interface radio, dans lequel le premier paquet de données est converti par le premier dispositif de communication (1) en au moins un deuxième paquet de données suivant un deuxième protocole de transmission, dans lequel l'au moins un deuxième paquet de données est envoyé à un deuxième dispositif de communication (5) de l'installation de domotique, dans lequel le deuxième paquet de données est reçu par le deuxième dispositif de communication (5), dans lequel le deuxième paquet de données est converti par le deuxième dispositif de communication (5) en un troisième paquet de données suivant le premier protocole de transmission et est délivré en sortie par l'intermédiaire d'une première interface (2) du deuxième dispositif de communication, réalisée sous forme d'interface radio, dans lequel l'ensemble du premier paquet de données reçu forme un bloc de données à l'intérieur du deuxième paquet de données, **caractérisé en ce que**, avant l'envoi, le deuxième paquet de données est crypté d'une manière pouvant être prescrite, **en ce qu'**une clé destinée au cryptage et au décryptage du deuxième paquet de données est générée dans le premier et le deuxième dispositif de communication (1, 5) au moyen d'un algorithme pouvant être prescrit et **en ce que** des enregistrements, spécifiques à l'installation de domotique, sont utilisés dans une table de routage mémorisée dans le premier et le deuxième dispositif de communication (1, 5), comme variables dans l'algorithme.

2. Procédé selon la revendication 1, **caractérisé en ce que** l'au moins un deuxième paquet de données est envoyé au deuxième dispositif de communication (5) par l'intermédiaire d'une liaison filaire (4).

3. Procédé selon la revendication 1 ou 2, **caractérisé en ce que** - préalablement - le premier paquet de données est produit après une entrée pouvant être prescrite par un dispositif d'entrée (6) et est envoyé par l'intermédiaire d'une interface radio de dispositif d'entrée (7).

4. Procédé selon l'une quelconque des revendications 1 à 3, **caractérisé en ce que** le deuxième paquet de données est envoyé suivant un protocole de transmission standardisé, de préférence UDP et/ou TCP/IP.

5. Procédé selon l'une quelconque des revendications 1 à 4, **caractérisé en ce que**, après avoir reçu avec succès le deuxième paquet de données, le deuxième dispositif de communication (5) envoie une confirmation de réception au premier dispositif de communication (1).

6. Procédé selon l'une quelconque des revendications 1 à 5, **caractérisé en ce que**, après avoir effectué l'envoi du deuxième paquet de données, le premier dispositif de communication (1) attend un laps de temps pouvant être prescrit la réception d'une confirmation de réception et, en l'absence de la confirmation de réception après l'écoulement du laps de temps, envoie à nouveau le deuxième paquet de données au deuxième dispositif de communication (5).

7. Procédé selon l'une quelconque des revendications 1 à 6, **caractérisé en ce que** le deuxième paquet de données est transmis directement par le premier dispositif de communication (1) au deuxième dispositif de communication (5).

8. Procédé selon l'une quelconque des revendications 1 à 7, **caractérisé en ce que** le troisième paquet de données est reçu par un dispositif de sortie (9).

9. Procédé selon la revendication 8, **caractérisé en ce qu'**au moins un paramètre du dispositif de sortie (9), en particulier un signal de sortie, est modifié de manière pouvant être prescrite par des informations contenues dans le troisième paquet de données.

10. Procédé selon l'une quelconque des revendications 1 à 9, **caractérisé en ce que**, après réception du premier paquet de données par le premier dispositif de communication (1), une adresse de destination contenue dans le premier paquet de données est lue, **en ce que** l'adresse de destination est comparée à une liste d'adresses de destination et **en ce que**, si l'adresse de destination apparaît dans la liste d'adresses de destination, le premier paquet de données est converti en deuxième paquet de données.

11. Procédé selon l'une quelconque des revendications 1 à 10, **caractérisé en ce que**, avant l'envoi du deuxième paquet de données, on vérifie au moyen d'un procédé destiné à éviter des collisions, en particulier conformément au CSMA/CD, si la liaison filaire avec le deuxième dispositif de communication (5) est libre pour une transmission de données et le deuxième paquet de données n'est envoyé que si la liaison filaire (4) est libre pour une transmission de données.
